# FASCICULE DE BREVET EUROPEEN

(11) **EP 3 459 207 B1**
(45) Date de publication et mention de la délivrance du brevet: **01.07.2020**
(21) Numéro de dépôt: 17727657.3
(22) Date de dépôt: 12.05.2017
(51) Int. Cl.: H04L 12/24, H04L 12/28

(54) **GESTION D'ÉQUIPEMENTS À DISTANCE**
FERNBEDIENUNG EINER AUSRÜSTUNG
REMOTE CONTROL OF EQUIPMENT

(30) Priorité: 17.05.2016 FR 1654354
(43) Date de publication de la demande: 27.03.2019
(73) Titulaire: ORANGE, 75015 Paris (FR)
(72) Inventeur: GERODOLLE, Anne, 38320 Eybens (FR); DOUET, Marc, 38340 Voreppe (FR); BASSET, Régine, 38920 Crolles (FR)
(86) Numéro de dépôt international: PCT/FR2017/051151
(87) Numéro de publication internationale: WO 2017/198932

(56) Documents cités:
- US-A1- 2012 297 087
- John Blackford ET AL: "TR-069 CPE WAN Management Protocol", , 8 janvier 2014 (2014-01-08), pages 1-228, XP055278927, Extrait de l'Internet: URL:https://www.broadband-forum.org/techni cal/download/TR-069_Amendment-5.pdf [extrait le 2016-06-08] cité dans la demande

## Description

### Domaine technique

L'invention se rapporte au domaine général des télécommunications.

Elle concerne plus particulièrement l'administration et la maintenance à distance d'équipements d'un réseau de communication privé à partir d'un serveur d'administration.

### Etat de la technique

Dans le cadre de leurs offres de services, les fournisseurs de services tels que les opérateurs de télécommunications sont amenés à équiper leurs clients avec des équipements spécifiques adaptés à leurs services. Il s'agit par exemple d'équipements (aussi appelés dispositifs) localisés dans un site client, également appelés CPE, pour « Customer Premises Equipment », et généralement connectés à un réseau de communication étendu, tel que le réseau Internet, par l'intermédiaire d'une passerelle de service. Ces équipements installés chez les clients sont généralement connectés à un réseau local (ex. réseau local domestique ou réseau d'entreprise). De tels équipements sont par exemple des boîtiers décodeurs de contenus numériques (Set Top Box en anglais), des terminaux de visiophonie ou de voix sur IP (ou VoIP pour Voice Over IP), des terminaux mobiles, etc. Dans le contexte d'un réseau domotique, il peut s'agir également d'équipements d'électroménager, de systèmes d'alarme, de capteurs, etc.

Le fournisseur de services assure généralement la gestion et la maintenance des divers équipements qu'il a placés chez les clients. Cette gestion concerne notamment l'activation, la configuration, la mise à jour, etc. des équipements et des services associés.

Pour réaliser cette gestion, ou administration à distance, de nombreux fournisseurs de services utilisent par exemple le protocole standardisé CWMP (pour CPE WAN Management Protocol), aussi appelé « TR-069 » et publié par le forum international « Broadband Forum ». La spécification la plus récente de ce protocole est l'amendement 5, consultable à l'adresse *http:*//*www.broadband-forum.org*/*technical*/*download*/*TR-069_Amendment-5.pdf.*

Alternativement, tout autre protocole d'administration posant les mêmes problèmes et offrant les mêmes capacités pourrait être envisagé dans le contexte de cette invention.

Ce protocole offre au fournisseur de services un ensemble de services de gestion des équipements comprenant l'administration, le contrôle, le paramétrage, le suivi des performances et de diagnostic, etc. tout en répondant à des exigences de sécurité, d'extensibilité et d'indépendance vis-à-vis du fabricant des équipements. Le protocole CWMP s'appuie sur le protocole de transport HTTP (HyperText Transport Protocol) ou HTTPS (HTTP Secure), et sur le protocole SOAP (Simple Object Access Protocol). Il permet la communication entre un dispositif, ou serveur d'auto-configuration (ACS pour Auto-Configuration Server) distant et un équipement du réseau local au cours de sessions initiées par ce dernier. Ces sessions peuvent être initiées pour différentes raisons (première connexion de l'équipement à un ACS, démarrage ou redémarrage, etc.) et également selon une période qui peut être déterminée par l'ACS. Toutefois, un mécanisme dit de demande d'établissement d'une session, ou « Connection Request » en anglais, est prévu par le protocole pour permettre au serveur ACS de provoquer de manière asynchrone une session avec l'équipement. Dans le cas d'un équipement situé derrière un système de traduction d'adresses (NAT), par exemple dans un réseau local administré par une passerelle de service, le mécanisme de « Connection Request » n'est cependant généralement pas applicable car l'adresse que l'équipement connaît de lui-même n'est pas une adresse accessible à partir de l'ACS. De même, un pare-feu peut empêcher l'accès à l'équipement.

Il existe des solutions à ce problème.

L'annexe G du protocole CWMP définit par exemple un mécanisme permettant d'atteindre des équipements connectés derrière une entité NAT. Ce mécanisme s'appuie sur le protocole STUN (Simple Traversai of UDP through NATs) et sur le protocole UDP (User Datagram Protocol). Il prévoit le maintien d'une connexion ouverte avec un serveur STUN via l'envoi de messages périodiques à ce serveur, cette connexion étant alors utilisée par le serveur ACS pour contacter le CPE.

Le mécanisme prévu à l'annexe K du protocole CWMP, s'appuyant sur le protocole XMPP (Extensible Messaging and Presence Protocol) propose une autre solution pour contacter les équipements qui se trouvent derrière une passerelle ou un NAT. Ce mécanisme ne suppose aucune compétence liée au protocole XMPP sur la passerelle elle-même, mais seulement sur les équipements concernés (CPE et ACS). Cependant, le CPE doit maintenir en permanence une connexion valide avec un serveur, ce qui est contraignant et monopolise des ressources.

Le Document "US 2012/297087 A1 (HUMBLE FILIP [BE] ET AL) 22 novembre 2012 (2012-11-22)" remarque que, afin de pouvoir gérer un dispositif CPE, un ACS doit tout d'abord établir une session de communication avec le CPE. Le document propose un nœud intermédiaire, nommé "blast box" pour assister le ACS dans la tâche de communiquer avec le CPE.

Dans la suite, on appelle « indirectes » de telles solutions, qui nécessitent la présence de modules spécifiques au niveau de l'équipement (par exemple, un client STUN) et du serveur ACS du fournisseur de service (par exemple, un serveur STUN) et qui s'appuient sur le maintien d'une connexion permanente entre l'équipement et un serveur (par exemple le serveur STUN dans le cas de STUN, ou le serveur XMPP dans le cas de XMPP), ce qui présente des inconvénients lorsque de nombreux équipements doivent être gérés, notamment en termes de dimensionnement du serveur et de bande passante requise.

L'invention vient réduire les inconvénients de l'état de la technique.

### L'invention

L'invention est définie para le procédé de la revendication 1, le système de la revendication 7 et le programme d'ordinateur de la revendication 8.

A cet effet, selon un aspect fonctionnel, l'invention a pour objet un procédé de gestion de la sélection d'une méthode de communication entre un dispositif de gestion d'équipements appartenant à un réseau étendu de communication et un équipement appartenant à un réseau local de communication, le procédé comprenant, sur le dispositif de gestion :
- une étape de demande à l'équipement d'initier une connexion avec le dispositif de gestion, ladite demande étant envoyée pendant une connexion courante de l'équipement avec le dispositif de gestion ;
- une étape de test pour déterminer si l'équipement est joignable selon une méthode directe par le dispositif de gestion ;
- une étape de configuration de l'équipement si ledit équipement n'est pas joignable selon une méthode directe.

Par « méthode directe », on entend une méthode de communication par laquelle le dispositif de gestion peut joindre l'équipement sans autre intermédiaire que les équipements du réseau et peut échanger des données directement sur cette adresse (par exemple une adresse universelle - URL). Dans ce cas, l'équipement est dit « joignable directement ».

L'invention offre l'avantage de pouvoir tester si l'équipement est joignable directement. Dans la négative, il est utile de le configurer pour une autre méthode, qui permettra de pallier les inconvénients inhérents au fait de ne pas pouvoir joindre le CPE directement. Ces méthodes peuvent cependant être coûteuses en ressources. L'invention permet de ne pas mobiliser inutilement ces ressources si le CPE est joignable directement.

Selon un mode de mise en œuvre particulier de l'invention, dans un procédé tel que décrit ci-dessus, l'équipement est apte à être joint par une méthode indirecte par le dispositif de gestion et l'étape de configuration est une étape de paramétrage et activation de la méthode indirecte

Dans le cas où l'équipement n'est pas joignable directement, il est dit « injoignable directement », par exemple, parce qu'il se trouve derrière une passerelle, un pare-feu, etc. Dans ce cas, il peut être fait recours à une méthode dite « indirecte » utilisant les services additionnels de modules logiciels et/ou matériels qui permettent d'accéder à l'équipement (serveurs additionnels par exemple de type STUN ou XMPP, module logiciel sur la passerelle et/ou l'équipement, etc.). Ces méthodes peuvent être coûteuses en ressources, notamment lorsque de nombreux équipements doivent être gérés, en termes de dimensionnement du serveur et de la bande passante requise. Avantageusement, ce mode de réalisation permet de joindre dans tous les cas le CPE en évitant d'utiliser la méthode indirecte si elle n'est pas nécessaire. Des exemples de paramétrage sont décrits dans TR-069 pour XMPP/STUN.

Selon un second mode de mise en œuvre particulier de l'invention, qui pourra être mise en œuvre alternativement ou cumulativement avec le précédent, dans un procédé tel que décrit ci-dessus, l'étape de configuration consiste à activer un mode de connexion périodique et à en paramétrer la fréquence.

Les sessions entre le CPE et l'ACS peuvent être initiées selon une période qui peut être déterminée par l'ACS. Avantageusement, ce mode de réalisation de l'invention permet de régler (notamment d'augmenter) la fréquence de la connexion périodique des équipements injoignables directement, pour s'adapter aux besoins de gestion, en assurant un délai compatible avec les contraintes du fournisseur de services, tout en évitant d'appliquer ce réglage aux équipements qui sont joignables directement. On diminue ainsi la charge du serveur d'administration.

Selon un troisième mode de mise en œuvre particulier de l'invention, qui pourra être mise en œuvre alternativement ou cumulativement avec les précédents, un procédé tel que décrit ci-dessus comporte une étape d'initialisation d'une première période de temps et l'étape de configuration de l'équipement est effectuée seulement si ladite première période de temps est écoulée.

Avantageusement selon ce mode de réalisation, une période de temps, (en anglais, *time out*) est utilisée pour décider de la joignabilité de l'équipement.

Selon une variante de ce troisième mode de mise en œuvre particulier de l'invention, dans un procédé tel que décrit ci-dessus, l'étape de test pour déterminer si l'équipement est joignable selon une méthode directe est suivi des étapes suivantes, tant que la première période de temps n'est pas écoulée :
- attente pendant une seconde période de temps prédéterminée ;
- envoi d'une requête vers l'équipement.

Ce mode de mise en œuvre de l'invention permet avantageusement de maintenir la session ouverte en évitant sa fermeture prématurée à l'initiative du CPE avant l'issue de la première période de temps. La seconde période de temps permet d'espacer les requêtes vers l'équipement afin d'en limiter le nombre.

Selon une variante, la requête vers l'équipement est une requête neutre.

Avantageusement selon cette variante, la requête est « neutre » c'est-à-dire qu'elle ne modifie pas l'état du CPE. Il s'agit d'une requête d'attente dont le seul but est de maintenir la session ouverte. Il peut s'agir par exemple d'une requête « GetRPCMethods « conformément à la spécification TR-069 mentionnée précédemment.

Selon un quatrième mode de mise en œuvre particulier de l'invention, qui peut être mis en œuvre alternativement ou cumulativement avec les précédents, l'étape de demande à l'équipement d'initier une connexion est suivie de :
- une étape d'envoi d'un ordre de connexion différée de l'équipement après un délai prédéterminé ;
- une étape de réception d'une demande de connexion de l'équipement après ce délai ;
l'étape de test étant effectuée après réception de ladite demande de connexion.

Ce mode de réalisation de l'invention fournit les mêmes avantages que le mode de réalisation précédent. Cependant il n'utilise pas le mécanisme d'envoi de requêtes neutres.

Selon un aspect matériel, l'invention concerne également un système de gestion de la sélection d'une méthode de communication comprenant :
- un dispositif de gestion d'équipements appartenant à un réseau étendu de communication ;
- un équipement appartenant à un réseau local de communication ;
ledit dispositif de gestion comprenant :
- un module de demande à l'équipement d'initier une connexion avec le dispositif de gestion, ladite demande étant envoyée pendant une connexion courante de l'équipement avec le dispositif de gestion ;
- un module de test pour déterminer si l'équipement est joignable selon une méthode directe par le dispositif de gestion;
- un module de configuration de l'équipement si ledit équipement n'est pas joignable par une méthode directe.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un autre aspect matériel, l'invention concerne également un programme d'ordinateur apte à être mis en œuvre pour la sélection d'une méthode de communication entre un dispositif de gestion d'équipements et un équipement appartenant à un réseau local de communication tel que définis ci-dessus, le programme comprenant des instructions de code qui, lorsque le programme est exécuté par un processeur, réalise les étapes du procédé de gestion défini ci-dessus.

Selon encore un autre aspect matériel, l'invention a trait à un support d'enregistrement lisible par un processeur de données sur lequel est enregistré un programme comprenant des instructions de code de programme pour l'exécution des étapes du procédé défini ci-dessus.

Les objets selon les aspects matériels de l'invention procurent au moins les mêmes avantages que ceux procurés par le procédé selon le premier aspect. Les caractéristiques optionnelles évoquées pour le premier aspect peuvent s'appliquer aux aspects matériels en termes de procédé.

L'invention sera mieux comprise à la lecture de la description qui suit, donnée à titre d'exemple et faite en référence aux dessins annexés.

### Les figures:

La figure 1 représente un système d'administration à distance d'un réseau local dans un réseau de communication ;
La figure 2 représente l'architecture matérielle d'un serveur d'administration selon un mode de réalisation de l'invention ;
La figure 3 rappelle les étapes du mécanisme « Connection Request » prévu par le protocole CWMP ;
La figure 4 représente un organigramme illustrant les différentes étapes du procédé selon un mode de réalisation de l'invention.
La figure 5 représente un organigramme illustrant les différentes étapes du procédé selon un autre mode de réalisation de l'invention.

### Description détaillée d'un exemple de réalisation illustrant l'invention

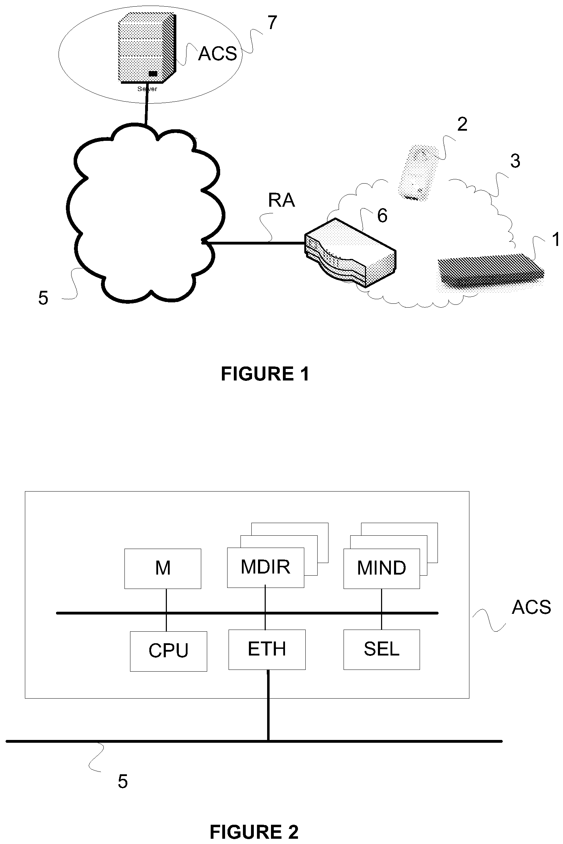

La figure 1 représente un réseau local 3 administré à distance par un système d'administration (7). Pour l'environnement représenté à la figure 1, on entend par réseau de communication local un réseau de type LAN (« Local Access Network »). Ce réseau peut être en particulier un réseau domestique ou un réseau d'entreprise. Une passerelle de service (6) est agencée pour fournir à des équipements du réseau local 3 un accès vers le réseau de communication étendu (5) (par exemple Internet), via un réseau d'accès symbolisé ici par le lien RA. Le protocole IP (pour « Internet Protocol ») est utilisé par les équipements dans le réseau local pour communiquer entre eux et également pour communiquer avec le réseau de communication étendu.

Le réseau local 3 peut comprendre un réseau filaire, par exemple de type Ethernet selon la norme IEEE 802.3, un réseau sans fil, par exemple de type Wi-Fi, selon la norme IEEE 802.11, ou bien encore un réseau par courant porteur en ligne CPL. Aucune limitation n'est attachée au type et au support du réseau local.

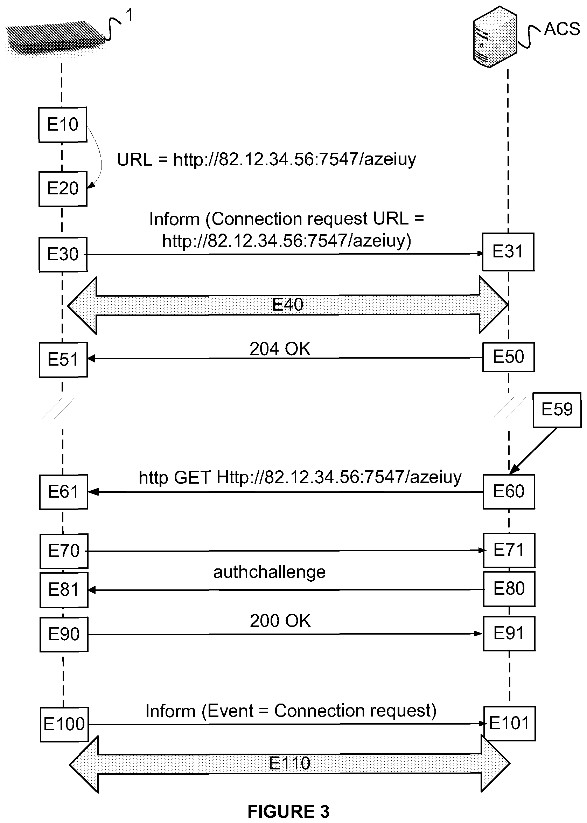

Les équipements, aussi appelés CPE, du réseau local 3 peuvent être n'importe quels équipements, par exemple domestiques, disposant d'une connexion au réseau local. Il peut s'agir par exemple d'un poste de radio connecté, d'un téléphone fixe, d'une télévision connectée, d'un décodeur TV (« Set-Top Box»), d'une console de jeux, de dispositifs électroménagers, etc. On a représenté sur la figure 3, à titre d'exemples, une STB (1) et un adaptateur à courant porteur (CPL, 2).

Les équipements (1,2) du réseau local 3 disposent d'une adresse qui leur est propre. La passerelle 6 peut contenir un système de translation d'adresse ou un pare-feu limitant l'accès du réseau public vers ce réseau local. De même, on notera que la passerelle 6 peut elle-même devenir injoignable dans le cas où un équipement en amont dans le réseau 5 effectue un filtrage ou une translation d'adresse. Dans ce cas, les mécanismes mis en œuvre dans l'invention peuvent s'appliquer à la passerelle elle-même.

Le système d'administration (7) regroupe une pluralité d'équipements permettant à l'opérateur du réseau de communication d'administrer et de superviser des équipements, notamment appartenant à des réseaux locaux. Le système d'administration 7 comprend notamment un serveur d'administration également appelé serveur d'auto-configuration ACS (pour « Auto-Configuration Server »), mais aussi d'autres dispositifs non représentés comme par exemple un centre d'appel et des centres de support opérationnels (OSS, pour « Operational Support System ») ou orientés métiers (BSS, pour « Business Support System »).

Dans le mode de réalisation décrit, l'administration des équipements et de la passerelle 6 du réseau de communication local 3 est réalisée à distance par le serveur d'administration ACS, situé en dehors du réseau local 3 et communiquant avec les équipements du réseau local 3 par l'intermédiaire d'un réseau d'accès et de la passerelle 6. Dans cet exemple, le serveur d'administration dialogue avec les équipements (1,2) du réseau local 3 en vue de leur administration selon le protocole de gestion à distance CWMP (« CPE WAN Management Protocol ») défini dans le rapport technique TR-069 élaboré par le Broadband Forum et introduit précédemment.

Au moyen du protocole CWMP, donné ici à titre d'exemple non limitatif, l'équipement d'administration peut notamment :
- obtenir et gérer à distance un état des équipements qui sont connectés au réseau local 3 ;
- initier des tests de diagnostics sur les équipements ;
- télécharger des fichiers de logiciel ou de microcode ;
- gérer des événements.
- etc.

Le rapport technique TR-069 prévoit qu'un équipement (1,2) du réseau local 3 établit sous certaines conditions une connexion avec le serveur d'administration ACS. Au cours de cette procédure, l'équipement (1,2) du réseau local 3 transmet différentes données d'administration le concernant. Les données d'administration reçues lors de cette procédure, appelée « Inform RPC », sont mémorisées par exemple dans une base de données (non représentée) et permettent ensuite au serveur d'administration ACS de réaliser différentes tâches de gestion de l'équipement. Les données d'administration comprennent en particulier une donnée de connexion correspondant à une adresse universelle (ou URL) notée *ConnectionRequestURL,* prévue pour permettre au serveur d'administration ACS de transmettre à l'équipement du réseau local une demande de connexion à cette adresse via le protocole HTTP. Cette demande de connexion permet de déclencher l'établissement d'une session de communication entre l'équipement à administrer et son serveur ACS.

On souligne ici le fait que, dans le cas particulier des équipements 1,2 du réseau local 3, la donnée de connexion, c'est-à-dire l'adresse universelle *ConnectionRequestURL,* peut correspondre à l'URL d'un équipement qui n'est pas accessible depuis l'extérieur du réseau local. Comme mentionné au préalable, La passerelle 6 elle-même peut être non accessible du fait d'un élément situé en amont dans le réseau 5.

La figure 2 représente schématiquement l'architecture matérielle et logicielle d'un serveur d'administration selon un mode de réalisation de l'invention.

Le serveur (ACS) comprend, classiquement, des mémoires (M) associées à un processeur (CPU). Les mémoires peuvent être de type ROM (de l'anglais Read Only Memory) ou RAM (de l'anglais Random Access Memory) ou encore Flash. Le serveur (ACS) communique avec le réseau étendu via, selon cet exemple, le module ETH (Ethernet).

Le dispositif comporte en outre un module de sélection (SEL) d'une méthode de communication choisie parmi les méthodes directes (MDIR) et les méthodes indirectes (MIND) disponibles qui peuvent être utilisées entre l'ACS et le CPE.

On rappelle qu'une méthode indirecte (MIND) est par exemple un module de communication apte à gérer une communication XMPP (ou STUN) avec un serveur XMPP (ou STUN). Une méthode directe est par exemple un module qui assure une communication « simple » selon le protocole CWMP avec un équipement du réseau local directement accessible depuis le serveur d'administration.

Il existe d'autres méthodes directes ou indirectes non normalisées.

Il n'existe en revanche aucune solution offrant les avantages de l'invention en permettant de choisir entre une méthode directe et une méthode indirecte.

La figure 3 rappelle les étapes du mécanisme « Connection Request » selon l'état de l'art prévu par le protocole CWMP, qui permet au serveur ACS de provoquer de manière asynchrone une session avec l'équipement.

De manière générale, lors de chaque démarrage de l'équipement ou CPE (étape E10), celui-ci ouvre un serveur HTTP sur une adresse aussi appelée URL (Uniform Resource Locator) (étape E20). Cette URL comprend l'adresse IP (Internet Protocol) de l'équipement et le port sur lequel il peut être joint dans le réseau local auquel il appartient, en particulier pour mettre en œuvre une procédure de « Connection Request » telle que mentionnée précédemment. Selon notre exemple, l'URL est notée : URL = http://82.12.34.56:7547/azeiuy.

Puis le CPE envoie une requête http POST contenant un message CWMP de type *Inform* au serveur ACS auquel il est rattaché et qui assure sa gestion, autrement dit son administration (étape E30). Dans ce message, le CPE indique un certain nombre de paramètres, notamment l'URL du serveur HTTP ouvert à l'étape E20, sur laquelle le serveur ACS peut le contacter. Ce message est noté symboliquement sur la figure sous la forme :
Inform (Connection request URL = http://82.12.34.56:7547/azeiuy)

On note qu'en cas de changement de cette URL, le CPE doit notifier le serveur ACS de sorte que celui-ci ait toujours à sa disposition une URL à jour.

Un dialogue s'ensuit entre le CPE et le serveur ACS dans la session ainsi établie (étape E40), qui se clôture par un message 204 (OK) envoyé par le serveur ACS au CPE (étape E50).

On suppose maintenant qu'ultérieurement, au cours d'une étape E59, le fournisseur de services requiert une opération de mise à jour sur le CPE par l'intermédiaire du serveur ACS. Le mécanisme de « Connection Request » prévu par le protocole CWMP va être mis en œuvre. Lors d'une étape E60, une requête http de type GET est émise à destination du CPE sur l'URL fournie au préalable par celui-ci. De façon connue, dans le protocole HTTP, la méthode GET permet de demander une ressource.

Le protocole CWMP prévoit, en réponse à la requête du serveur ACS, une authentification du serveur ACS par le CPE (étapes E70 à E90), au cours de laquelle le serveur ACS utilise pour s'authentifier un identifiant et un mot de passe préalablement partagés entre le CPE et le serveur ACS (étape E80). Un message 200 OK (ou 204 en l'absence de contenu) est émis par le CPE à destination du serveur ACS en cas de succès de l'authentification (E90).

Si un message 200 ou 204 est renvoyé par le CPE, celui-ci devra ensuite tenter d'initier une session avec son ACS. Pour cela, il envoie un message *Inform* au serveur ACS contenant un événement « Event = ConnectionRequest » (E100). Dès lors, le serveur ACS peut administrer à distance le CPE via la session ainsi établie (E110) et lui demander différentes actions par le biais de commandes RPC (Remote Procédure Call) en vue de sa mise à jour. Par exemple, il peut lui demander de télécharger un fichier de configuration, de retourner la valeur d'un de ses paramètres, etc.

Autrement dit, selon ce mécanisme de « Connection Request », le serveur ACS requiert une connexion du CPE en visitant une URL fournie par le CPE. Ce mécanisme de base suppose donc que le CPE soit joignable directement par le serveur ACS sur l'URL indiquée dans le message *Inform.* Il n'est donc pas applicable lorsque le CPE est situé derrière une entité de traductions d'adresses aussi appelée NAT (Network Address Translation) ou derrière un pare-feu protégeant le réseau local auquel le CPE appartient (à moins que l'on puisse bénéficier d'une autre solution directe telle que celle décrite à l'appendice IV de la spécification TR-69, amendement 5).

Comme exposé préalablement, il existe un certain nombre de solutions à ce problème, notamment celles spécifiées aux annexes G (STUN) et K (XMPP) de la spécification CWMP. Cependant, ces solutions imposent le maintien d'une connexion entre le CPE et un serveur, ce qui est contraignant et monopolise des ressources matérielles et logicielles.

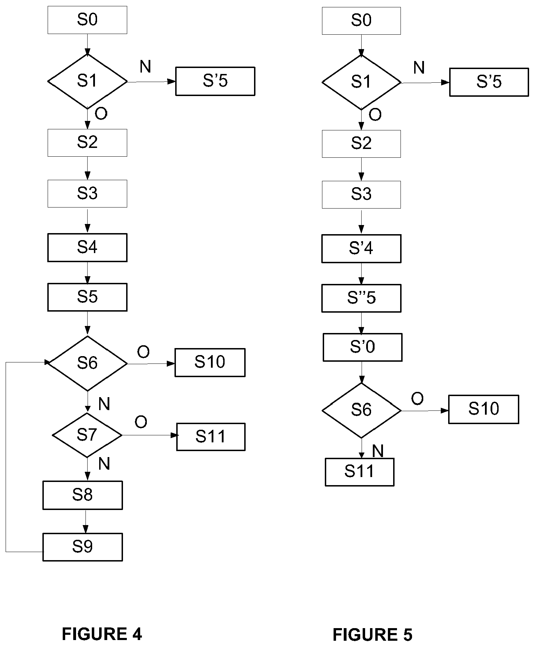

Deux exemples de solution selon l'invention, permettant de relâcher ces ressources lorsqu'elles ne sont pas nécessaires, c'est-à-dire lorsque le CPE qui implémente une telle méthode indirecte est directement joignable, vont maintenant être décrits à l'appui des figures 4 et 5.

La figure 4 représente un organigramme détaillé d'un procédé selon un mode de réalisation de l'invention.

L'invention s'applique notamment si le CPE est capable d'utiliser une méthode indirecte, par exemple STUN ou XMPP. Comme il a été expliqué ci-dessus, l'utilisation d'une telle méthode oblige à maintenir actives un ensemble de ressources qui peuvent être économisées par la mise en œuvre de l'invention.

Le principe général de ce mode de réalisation est le suivant : lorsque l'équipement (CPE) démarre une session CWMP avec l'ACS après un redémarrage ou lorsqu'il informe l'ACS que son adresse de connexion a changé, avant de clôturer la session, l'ACS vérifie si l'adresse de connexion indiquée est utilisable directement (selon une méthode directe). Pour cela, il commence par envoyer une requête GET sur l'adresse fournie par l'équipement en utilisant l'identifiant et le mot de passe utilisé lors du mécanisme de « ConnectionRequest ». Tant qu'il n'a pas reçu de réponse, il maintient la session ouverte pendant une période de temps prédéterminée (appelée ici REACHABILITY_TIMEOUT). Si, avant l'expiration de cette période de temps prédéterminée, l'ACS reçoit une réponse à la requête GET, il considère que l'équipement est joignable. Il peut donc éviter d'activer sur l'équipement une méthode indirecte telle que XMPP ou STUN, pour l'envoi de demande de connexion. Si par contre l'ACS ne reçoit pas de réponse avant l'expiration de la période de temps prédéterminée, dans cet exemple il active sur l'équipement la méthode indirecte que celui-ci implémente. Par la suite, pour l'envoi d'une demande de connexion, l'ACS utilisera soit la méthode directe soit la méthode indirecte, en fonction de la décision prise lors de l'étape précédente par le module de sélection de l'ACS.

L'organigramme de la figure 4 précise ces principes de manière plus détaillée dans le cadre d'un mode de réalisation particulier de l'invention. Il enchaîne les étapes S0 à S11 suivantes sur l'ACS :

Lors d'une étape S0, l'ACS reçoit classiquement (conformément aux étapes E30/E31 décrites préalablement à l'appui de la figure 3) un message *Inform* ; selon notre exemple, le message Inform contient l'adresse de connexion http://82.12.34.56:7547/azeiuy.

Lors de l'étape S1 qui la suit, on évalue la pertinence de mettre en œuvre la méthode selon l'invention. Pour cela, par exemple, si le CPE se connecte pour la première fois à l'ACS, ou s'il redémarre, ou si son adresse IP a changé, etc., on valide cette étape pour passer à l'étape S2. Sinon, on considère qu'il n'est pas nécessaire de mettre en œuvre les étapes S2 à S11 et l'algorithme se poursuit par une étape S'5 similaire à l'étape S5 qui sera décrite par la suite, au cours de laquelle l'ACS peut classiquement effectuer des opérations d'administration et mettre fin à la session.

Lors de l'étape S2 qui la suit, l'ACS extrait l'information de connexion, c'est à dire ici l'adresse « URL = http://82.12.34.56:7547/azeiuy ».

Puis lors d'une étape S3, cette adresse est utilisée pour émettre une requête d'établissement d'une session de gestion vers le CPE. Cette requête est noté de façon abrégée dans le schéma de la figure 3 par :
request URL (http GET http://82.12.34.56:7547/azeiuy)

Lors de l'étape S4 qui la suit, l'ACS initie une première période de temps (timer) notée ici REACHABILITY_TIMEOUT; à l'issue de cette période de temps, il pourra être décidé par l'ACS que le CPE n'est pas joignable.

Lors d'une étape S5 suivante, un dialogue CWMP peut être établi. L'ACS peut par exemple effectuer au cours de cette session des opérations d'administration (configuration du CPE, mise à jour du *firmware,* etc).

Lors d'une étape S6, l'ACS teste s'il a reçu une réponse à la requête de connexion « Connection Request ». Si la connexion avec le CPE est réussie, il reçoit un code 200 conformément à l'étape 90 décrite à la figure 3 (ou 204 en cas de réponse vide). Si le CPE décide de ne pas donner suite à la requête (parce qu'il est déjà dans une session, ou parce qu'il estime être en surcharge, etc.), il répond par un code 503, conformément à la spécification du protocole CWMP. Dans ce dernier cas, on notera que le CPE est actif (il répond à la requête HTTP) mais ne contactera pas l'ACS via un message *Inform.*

Si l'ACS a reçu une telle réponse à sa requête GET préalable, il considère que l'équipement est joignable selon une méthode directe. Il peut donc éviter d'activer sur l'équipement une méthode indirecte telle que XMPP ou STUN, pour l'envoi de demande de connexion. La fin du dialogue est alors signifiée lors d'une étape S10 (envoi du code 204).

Si, au contraire, l'ACS n'a pas reçu de réponse à la requête GET, il s'ensuit une étape S7 au cours de laquelle il est testé si le délai (période de temps) REACHABILITY_TIMEOUT est écoulé.

Si le résultat de ce test est positif, c'est-à-dire si le délai est écoulé sans avoir reçu de réponse du CPE, celui-ci est considéré comme injoignable directement ; l'ACS prend donc au cours de l'étape S11 les mesures qui s'imposent : par exemple pour la mise en place d'une méthode indirecte, configuration XMPP ou STUN, ou toute autre technique disponible. Cette configuration est suivie d'un message de fin de dialogue (204).

Si le résultat de ce test est négatif, c'est-à-dire si le délai REACHABILITY_TIMEOUT n'est pas encore écoulé, ceci peut signifier que le CPE est joignable mais n'a pas eu le temps de répondre. Une étape S8 est donc effectuée au cours de laquelle l'ACS attend pendant une seconde période de temps prédéterminée, nommé ici « CPE_CONNECTION_TIMEOUT ». Cette période tient compte du fait que selon la norme, après avoir posté un message à l'ACS, l'équipement doit maintenir la connexion ouverte pendant au moins un temps prédéterminé, défini actuellement à 30 secondes, avant de considérer que l'ACS est injoignable. Pour éviter la fermeture prématurée de la session par le CPE, l'ACS espace donc ses requêtes d'un délai inférieur à la valeur de 30 secondes proposée par la norme, par exemple 20 secondes (CPE_CONNECTION_TIMEOUT = 20 secondes).

L'ACS envoie à l'équipement, au cours d'une étape S9, une requête dite « neutre » (telles que *GetParameterNames, GetRPCMethods,* etc., définies dans la norme), c'est-à-dire destinée uniquement au maintien de la session sans action particulière sur le CPE, de manière à laisser le temps à celui-ci de répondre à la requête de connexion (HTTP ConnectionRequest). Cette requête à pour but de conserver la session ouverte.

Cette étape S9 est suivie d'un retour à l'étape S6 déjà mentionnée.

La figure 5 représente un organigramme illustrant les différentes étapes du procédé selon un autre mode de réalisation de l'invention.

Les étapes S0 à S3 sont identiques à celles de la figure 4.

Lors de l'étape S'4 suivante, un dialogue CWMP peut être établi. L'ACS envoie alors à l'équipement un ordre lui demandant d'initialiser une nouvelle connexion après un délai SCHEDULE_DELAY; à l'issue de cette période de temps, il pourra être décidé par l'ACS que le CPE n'est pas joignable.

Lors d'une étape S"5 suivante, l'ACS peut par exemple effectuer au cours de cette session des opérations d'administration (configuration du CPE, mise à jour du *firmware,* etc). L'ACS clôt ensuite la session et attend une nouvelle connexion de l'équipement.

Lors de l'étape S'0, l'ACS reçoit un nouveau message *Inform* correspondant à la demande effectuée à l'étape S'4.

Lors d'une étape S6, l'ACS teste s'il a reçu une réponse à la requête de connexion « Connection Request ». Si l'ACS a reçu une telle réponse à sa requête GET préalable, il considère que l'équipement est joignable selon une méthode directe. Il peut donc éviter d'activer sur l'équipement une méthode indirecte telle que XMPP ou STUN, pour l'envoi de demande de connexion. La fin du dialogue est alors signifiée lors d'une étape S10 (envoi du code 204).

Si, au contraire, l'ACS n'a pas reçu de réponse à la requête GET, l'équipement est considéré comme injoignable directement ; l'ACS prend donc les mesures qui s'imposent pour la mise en place d'une méthode indirecte au cours de l'étape S11 identique à celle de la figure 4.

Une variante de ce mode de réalisation consisterait à n'envoyer le message contenant le délai « SCHEDULE INFORM » que si le CPE n'a pas encore répondu à la demande de connexion. Dans ce cas, il peut être intéressant d'effectuer avant S'4 les opérations de gestion décrites à l'étape S"5 (sauf la fermeture de la session) afin d'augmenter les chances d'avoir une réponse du CPE.

Les deux modes de réalisation décrits à l'appui des figures 4 et 5 diffèrent par le fait que dans un premier cas toutes les opérations sont effectuées dans une même session, ce qui peut nécessiter l'envoi artificiel de messages « neutres » au CPE afin de maintenir la session ouverte pendant un temps suffisant pour pouvoir considérer que le CPE n'est pas joignable en cas de non-réponse, alors que dans le second cas (figure 5), la tentative de connexion et le test de joignabilité sont effectués au cours de deux sessions successives mais espacées d'un laps de temps suffisant.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Notamment, le test de l'étape S1 des figures 4 et 5, portant sur le choix de mettre en œuvre ou non l'algorithme de l'invention, peut être fait selon différents critères combinables : selon les événements indiqués par le CPE (mise en œuvre de l'algorithme sur événements BOOTSTRAP et BOOT), selon un critère temporel (si la dernière mise en œuvre remonte à plus de dix jours par exemple), ou si une tentative de connexion directe a échoué depuis la dernière mise en œuvre de l'algorithme, etc.

On rappelle aussi que l'invention s'applique non seulement à CWMP mais encore à tout protocole dans lequel on gèrerait des équipements qui ne sont pas forcément joignables directement, en particulier dans le cas où ils sont capables de mettre en œuvre des méthodes indirectes pour pallier ce problème, au détriment cependant de la simplicité et du coût de mise en œuvre.

## Revendications

1. Procédé de gestion de la sélection d'une méthode de communication entre un dispositif de gestion d'équipements (ACS) appartenant à un réseau étendu de communication (5) et un équipement (CPE) appartenant à un réseau local de communication, le procédé comprenant, sur le dispositif de gestion :
- une étape (S0) de réception d'une demande de connexion de l'équipement ;
- une étape (S3) de demande à l'équipement d'initier une connexion avec le dispositif de gestion ;
- une étape (S6) de test pour déterminer si l'équipement répond dans une première période de temps (REACHABILlTY_TIMEOUT) à ladite demande d'initier une connexion ;
- si l'équipement ne répond pas dans ladite première période de temps, une étape (S11) de configuration de l'équipement pour le rendre accessible au dispositif de gestion.

2. Procédé de gestion selon la revendication 1, selon lequel l'étape de configuration (S11) est une étape de commande de paramétrage d'un module client sur l'équipement (STUN, XMPP).

3. Procédé de gestion selon la revendication 1, selon lequel l'étape de configuration (S11) consiste à activer un mode de connexion périodique et à en paramétrer la fréquence.

4. Procédé de gestion selon la revendication 1, dans lequel l'étape de test (S6) pour déterminer si l'équipement répond est suivie des étapes suivantes, tant que la première période de temps (REACHABILITY_TIMEOUT) n'est pas écoulée :
- attente (S8) pendant une seconde période de temps (CPE_CONNECTION_TIMEOUT) prédéterminée ;
- envoi d'une requête (S9) vers l'équipement (CPE).

5. Procédé de gestion selon la revendication 4, **caractérisé en ce que** la requête (S9) vers l'équipement (CPE) est une requête neutre.

6. Procédé de gestion selon la revendication 1, dans lequel l'étape de demande à l'équipement (CPE) d'initier une connexion (S3) est suivie de :
- une étape d'envoi d'un ordre (S'4, SCHEDULE_INFORM) de connexion différée de l'équipement (CPE) après un délai prédéterminé (SCHEDULE_DELAY) ;
- une étape de réception d'une demande de connexion (S'0) de l'équipement après ce délai ;
et l'étape de test (S6) est effectuée après réception de ladite demande de connexion (S'0).

7. Système de gestion de la sélection d'une méthode de communication comprenant :
- un dispositif de gestion (ACS) d'équipements appartenant à un réseau étendu de communication ;
- un équipement (CPE) appartenant à un réseau local de communication ;
ledit dispositif de gestion (ACS) comprenant :
- un module de réception d'une demande de connexion de l'équipement ;
- un module de demande à l'équipement (CPE) d'initier une connexion avec le dispositif de gestion (ACS) ;
- un module de test (SEL, S6) pour déterminer si l'équipement répond dans une première période de temps (REACHABILITY_TIMEOUT) à ladite demande d'initier une connexion ;
- un module (MIND, S11) de configuration de l'équipement pour le rendre accessible au dispositif de gestion si ledit équipement ne répond pas dans ladite période de temps.

8. Programme d'ordinateur comportant des instructions de code pour la mise en œuvre du procédé de gestion de la sélection d'une méthode de communication entre un dispositif de gestion (ACS) d'équipements et un équipement (CPE) appartenant à un réseau local de communication (3), conforme à la revendication 1, lorsque celle-ci est exécutée par un processeur.

## Patentansprüche

1. Verfahren zur Verwaltung der Auswahl einer Methode der Kommunikation zwischen einer Vorrichtung zur Verwaltung von Einrichtungen (ACS), die zu einem Weitverkehrsnetz (5) gehört, und einer Einrichtung (CPE), die zu einem lokalen Kommunikationsnetz gehört, wobei das Verfahren umfasst, an der Verwaltungsvorrichtung:
- einen Schritt (S0) des Empfangs einer Verbindungsanforderung von der Einrichtung;
- einen Schritt (S3) der Anforderung an die Einrichtung, eine Verbindung mit der Verwaltungsvorrichtung einzuleiten;
- einen Schritt (S6) der Prüfung, um zu bestimmen, ob die Einrichtung in einem ersten Zeitraum (REACHABILITY_TIMEOUT) auf die Anforderung, eine Verbindung einzuleiten, antwortet;
- falls die Einrichtung im ersten Zeitraum nicht antwortet, einen Schritt (S11) der Konfiguration der Einrichtung, um sie für die Verwaltungsvorrichtung zugreifbar zu machen.

2. Verfahren zur Verwaltung nach Anspruch 1, wobei der Schritt der Konfiguration (S11) ein Schritt der Steuerung der Parametrierung eines Client-Moduls an der Einrichtung (STUN, XMPP) ist.

3. Verfahren zur Verwaltung nach Anspruch 1, wobei der Schritt der Konfiguration (S11) darin besteht, einen Modus der periodischen Verbindung zu aktivieren und die Frequenz davon zu parametrieren.

4. Verfahren zur Verwaltung nach Anspruch 1, wobei auf den Schritt der Prüfung (S6), um zu bestimmen, ob die Einrichtung antwortet, die folgenden Schritte folgen, solange der erste Zeitraum (REACHABILITY_TIMEOUT) nicht abgelaufen ist:
- Warten (S8) während eines vorbestimmten zweiten Zeitraums (CPE_CONNECTION_TIMEOUT);
- Senden einer Anfrage (S9) an die Einrichtung (CPE).

5. Verfahren zur Verwaltung nach Anspruch 4, **dadurch gekennzeichnet, dass** die Anfrage (S9) an die Einrichtung (CPE) eine neutrale Anfrage ist.

6. Verfahren zur Verwaltung nach Anspruch 1, wobei auf den Schritt der Anforderung an die Einrichtung (CPE), eine Verbindung einzuleiten (S3), folgen:
- ein Schritt des Sendens eines Befehls (S'4, SCHEDULE_INFORM) für eine zeitversetzte Verbindung der Einrichtung (CPE) nach einer vorbestimmten Verzögerung (SCHEDULE_DELAY);
- ein Schritt des Empfangs einer Verbindungsanforderung (S'0) von der Einrichtung nach dieser Verzögerung;
und wobei der Schritt der Prüfung (S6) nach Empfang der Verbindungsanforderung (S'0) ausgeführt wird.

7. System zur Verwaltung der Auswahl einer Methode der Kommunikation, welches umfasst:
- eine Vorrichtung zur Verwaltung (ACS) von Einrichtungen, die zu einem Weitverkehrsnetz gehört;
- eine Einrichtung (CPE), die zu einem lokalen Kommunikationsnetz gehört;
wobei die Verwaltungsvorrichtung (ACS) umfasst:
- ein Modul zum Empfang einer Verbindungsanforderung von der Einrichtung;
- ein Modul zur Anforderung an die Einrichtung (CPE), eine Verbindung mit der Verwaltungsvorrichtung (ACS) einzuleiten;
- ein Prüfmodul (SEL, S6), um zu bestimmen, ob die Einrichtung in einem ersten Zeitraum (REACHABILITY_TIMEOUT) auf die Anforderung, eine Verbindung einzuleiten, antwortet;
- ein Modul (MIND, S11) zur Konfiguration der Einrichtung, um sie für die Verwaltungsvorrichtung zugreifbar zu machen, falls die Einrichtung in dem Zeitraum nicht antwortet.

8. Computerprogramm, welches Codeanweisungen zur Durchführung des Verfahrens zur Verwaltung der Auswahl einer Methode der Kommunikation zwischen einer Vorrichtung zur Verwaltung (ACS) von Einrichtungen und einer zu einem lokalen Kommunikationsnetz (3) gehörenden Einrichtung (CPE) gemäß Anspruch 1, wenn dieses Programm von einem Prozessor ausgeführt wird, umfasst.

## Claims

1. Method for controlling the selection of an approach for communication between an equipment control device (ACS) belonging to a wide area communication network (5) and equipment (CPE) belonging to a local area communication network, the method comprising, on the control device:
- a step (S0) for receiving a request for connection of the equipment;
- a step (S3) for requesting the equipment to initiate a connection to the control device;
- a test step (S6) to determine whether the equipment responds in a first time period (REACHABILITY_TIMEOUT) to said request to initiate a connection;
- if the equipment does not respond in said first time period, a step (S11) of configuring the equipment to make it accessible to the control device.

2. Control method according to Claim 1, wherein the configuration step (S11) is a step for controlling the setting of parameters of a client module on the equipment (STUN, XMPP).

3. Control method according to Claim 1, wherein the configuration step (S11) consists in activating a periodic connection mode and setting the parameters for the frequency thereof.

4. Control method according to Claim 1, wherein the test step (S6) for determining if the equipment responds is followed by the following steps, so long as the first time period (REACHABILITY_TIMEOUT) has not elapsed:
- waiting (S8) for a second predetermined time period (CPE_CONNECTION_TIMEOUT);
- sending a request (S9) to the equipment (CPE).

5. Control method according to Claim 4, **characterized in that** the request (S9) sent to the equipment (CPE) is a neutral request.

6. Control method according to Claim 1, wherein the step for requesting the equipment (CPE) to initiate a connection (S3) is followed by:
- a step for sending a command (S'4, SCHEDULE_INFORM) for delayed connection of the equipment (CPE) after a predetermined delay (SCHEDULE_DELAY);
- a step for receiving a request for connection (S'0) of the equipment after this delay;
and the test step (S6) is carried out after receipt of said connection request (S'0).

7. System for controlling the selection of an approach for communication comprising:
- an equipment control device (ACS) belonging to a wide area communication network;
- equipment (CPE) belonging to a local area communication network;
said control device (ACS) comprising:
- a module for receiving a request for connection of the equipment;
- a module for requesting the equipment (CPE) to initiate a connection to the control device (ACS);
- a test module (SEL, S6) for determining whether the equipment responds in a first time period (REACHABILITY_TIMEOUT) to said request to initiate a connection;
- a module (MIND, S11) for configuring the equipment to make it accessible to the control device if said equipment does not respond in said time period.

8. Computer program including code instructions for implementing the method for controlling the selection of an approach for communication between an equipment control device (ACS) and equipment (CPE) belonging to a local area communication network (3), according to Claim 1, when it is executed by a processor.
